# EUROPEAN PATENT APPLICATION

(11) **EP 4 692 741 A1**
(43) Date of publication of application: **11.02.2026**
(21) Application number: 23930721.8
(22) Date of filing: 11.07.2023
(51) Int. Cl.: G01G 19/387, G01G 19/393

(54) **COMBINATION BALANCE**

(30) Priority: 28.03.2023 JP 2023051391
(71) Applicant: Yamato Scale Co., Ltd., Akashi-shi, Hyogo 673-0849 (JP)
(72) Inventor: HONGOU Eisuke, Akashi-shi, Hyogo 673-0849 (JP)
(74) Representative: Ter Meer Steinmeister & Partner
(86) International application number: PCT/JP2023/025558
(87) International publication number: WO 2024/202089

(57) **Abstract**

The combination scale is equipped with two weighing units each having a dispersion feeder with a top cone, linear feeders, feeding hoppers and weighing hoppers, and two article feeders that feeds the top cones of the weighing units with articles. The troughs of the article feeders are extending in a direction of transport of articles and are disposed in parallel next each other in a manner that they overlap in part in a direction orthogonal to the direction of transport.

## Description

### TECHNICAL FIELD

This disclosure relates to a combination scale operable to combine a predetermined weight of articles to be handled and then discharge the weighed articles.

### BACKGROUND ART

The patent literature 1 describes an example of such combination scales. This combination scale is equipped with a plurality of weighing units. The weighing units each include a dispersing feeder, a plurality of linear feeders, a plurality of feeding hoppers, and a plurality of weighing hoppers. The dispersion feeder radially disperses the articles supplied. The linear feeders are circumferentially disposed around the dispersion feeder to receive and transport the articles supplied from the dispersion feeder. The feeding hoppers receive the articles from the linear feeders and temporarily retain and then discharge the received articles. The weighing hoppers receive and weigh the articles discharged from the feeding hoppers.

In Fig. 10 of the patent literature 1 are illustrated two weighing units that are disposed in proximity. In these weighing units, the linear feeders are disposed around the dispersion feeders, except proximate portions of the weighing units around the dispersion feeders.

Thus, the linear feeders, feeding hoppers and weighing hoppers are not disposed in the proximate portions of two weighing units, so that cleaning that requires removal of the linear feeders becomes unnecessary in these portions.

### CITATION LIST

### PATENT LITERATURE

Patent literature 1: 2009-69101A (Fig. 10)

### SUMMARY OF THE INVENTION

### TECHNICAL PROBLEMS

It is described in the patent literature 1 that the articles are supplied from an external feeder to the dispersion feeders of two weighing units. This patent literature, however, fails to describe any structural advantage that may allow the articles to be evenly and stably supplied to the dispersion feeders of two weighing units.

To address these issues of the known art, this disclosure is directed to providing technical means that enables stable and even supply of articles to the dispersion feeders of weighing units disposed in proximity to each other.

### SOLUTIONS TO THE PROBLEMS

To this end, this disclosure provides the following technical features.
1) A combination scale disclosed herein is equipped with two weighing units; first and second weighing units. The weighing units each include: a dispersion feeder, a plurality of linear feeders; a plurality of feeding hoppers; and a plurality of weighing units. The dispersion feeders each have a top cone circular in plan view and transport articles toward an outer peripheral edge of the top cone. The linear feeders are disposed circumferentially around the top cone and transport the articles supplied from the top cone. The feeding hoppers receive the articles supplied from the linear feeders; and a plurality of weighing units including a plurality of weighing hoppers that weigh the articles supplied from the feeding hoppers.

The combination scale is further equipped with a first article feeder and a second article feeder that respectively feeds the top cones of the first and second weighing units with the articles. The first article feeder and the second article feeder each have a trough used to transport the articles to the top cone. The toughs of the first and second article feeders are extending along a direction of transport of the articles. These troughs are disposed in parallel next to each other in a manner that they overlap in part in a direction orthogonal to the direction of transport of the articles.

In the combination scale disclosed herein, the troughs of the first and second article feeders are extending along the direction of transport of articles and are disposed in parallel next to each in a manner that they overlap in part in a direction orthogonal to the direction of transport of articles. Thus, the troughs of the first and second article feeders, which are used to supply the articles to the top cones, may be allowed to increase in length along the direction of transport of articles.

Greater lengths of the troughs of the first and second article feeders along the direction of transport of articles may facilitate control of the articles to be supplied to the top cones of the first and second weighing units. This may prevent the articles from being unnecessarily detained on the troughs, enabling stable and even supply of the articles to the top cones.

2) In a preferred embodiment of this disclosure, the troughs of the first and second article feeders are respectively disposed on one side and on another side across a virtual line that connects centers of the top cones circular in plan view.

According to this embodiment, the troughs of the first and second article feeders are thus disposed, respectively, on one side and on the other side across a virtual line that connects centers of the top cones.

The top cones of the first and second weighing unit may be closer to each other when these weighing units are disposed in proximity. Yet, the troughs of the first and second article feeders may be allowed to increase in length in the direction of transport of articles as described later by thus disposing the troughs of the first and second article feeders on one and the other side across a virtual line that connects centers of the top cones.

3) In an embodiment of this disclosure, the troughs of the first and second article feeders each have a bottom plate extending along the direction of transport of the articles and side plates standing upright from both sides of the bottom plate in a direction of width orthogonal to the direction of transport of the articles. The bottom plates each have, at an end thereof in the direction of transport of the articles, an extension extending more downstream than the side plates in the direction of transport of the articles.

According to this embodiment, the bottom plates each have, at an end thereof in the direction of transport of articles, an extension extending more downstream than the side plates in the direction of transport of articles. This structural feature may avoid any hindrance possibly caused by the side plates to the articles to be discharged onto the top cones of the first and second weighing units.

4) In an embodiment of this disclosure, the extensions of the troughs of the first and second article feeders are extending beyond ends of the bottom plates in the direction of width toward centers of the top cones of the first and second weighing unit.

In the combination scale of this embodiment, the extensions of the troughs of the first and second article feeders are extending beyond ends of the bottom plates in the direction of width toward centers of the top cones of the first and second weighing units. Thus, the articles may be transported from the extensions of the troughs' bottom plates and supplied to near the centers of the top cones of the first and second weighing units.

When the troughs of the first and second article feeders are respectively disposed on one side and on another side across a virtual line connecting centers of the top cones, the articles may be reliably supplied to near the centers of the top cones, and the articles arriving at the top cones may be then successfully dispersed into the linear feeders disposed around.

Further, the articles may also be supplied to the top cones from the both ends of the troughs' bottom plates in the direction of width. Thus, the articles may be dispersedly supplied to the top cones, instead of converging at near the centers of the top cones.

5) In an embodiment of this disclosure, the troughs of the first and second article feeders each include a first article feed path, a second article feed path, and a third article feed path. The first article feed paths are each used to feed the top cone with the articles from the end on one of the both sides of the bottom plate in the direction of width. The second article feed paths are each used to feed the top cone with the articles from an extended end of the extension. The third article feed paths are each used to feed the top cone with the articles from the end on another one of the both sides of the bottom plate in the direction of width.

According to this embodiment, the top cones of the first and second weighing units are supplied with the articles by the troughs of the first and second article feeders feed through the first to third article feed paths in at least three directions; the extension's extended end of the bottom plate and the ends on both sides of the bottom plates in the direction of width. Thus, the articles may be dispersedly supplied to each top cone, instead of converging at or leaned to one side of the top cone.

6) In an embodiment of this disclosure, an area near the top cones of the first and second weighing units is divided into regions; a feeder-located region where the linear feeders are circularly arranged, and a non-feeder region where no linear feeder is present. The articles received from the troughs of the first and second article feeders are transported by the top cones of the first and second weighing units toward the outer peripheral edges of the top cones in a circumferential direction thereof. A dividing wall is vertically disposed at a boundary position on each of the top cones between the feeder-located region and the non-feeder region, the dividing wall extending from the center of the top cone circular in plan view toward the outer peripheral edge thereof. The dividing walls each prevent the articles transported toward the outer peripheral edge of the top cone in the circumferential direction thereof from moving out of a region of the top cone corresponding to the feeder-located region into a region corresponding to the non-feeder region.

In this embodiment, a dividing wall is vertically disposed at a boundary position on each of the top cones between the feeder located region and the non-feeder region. Thus, the articles transported toward the outer peripheral edge of the top cone in its circumferential direction may be unlikely to mot out of a region of the top cone corresponding to the feeder-located region into a region corresponding to the non-feeder region. The articles may be then successfully thrown into the linear feeders located most downstream in the direction of transport of articles circumferentially around the top cone.

7) In an embodiment of this disclosure, a guiding wall is vertically disposed circumferentially on the outer peripheral edge of each of the top cones. The first article feed path feeds a region of the top cone corresponding to the feeder-located region with the articles.

In this embodiment, a guiding wall is vertically disposed circumferentially on the outer peripheral edge of each of the top cones. The articles transported to the outer peripheral edge of the top cone in its circumferential direction are then guided by this guiding wall to the feeder-located region where the linear feeders are disposed.

In the troughs of the first and second article feeders, the first article feed path feeds the top cone with the articles from one end side of the bottom plate in the direction of width and thus feeds a region corresponding to the non-feeder region of the top cone with the articles. Therefore, the articles supplied may be reliably guided from the non-feeder region into the most upstream one of the linear feeders in the feeder-located region.

### EFFECTS OF THE INVENTION

In the combination scale disclosed herein, the first and second article feeders feed the top cones of the first and second weighing units with articles, and the troughs of these article feeders are extending in the direction of transport of articles and are arranged in parallel next to each other. The troughs of the first and second article feeders, therefore, may be allowed to increase in length along the direction of transport of articles regardless of the first and second weighing units being arranged in proximity.

Greater lengths of the troughs of the first and second article feeders along the direction of transport of articles may facilitate control of the articles to be supplied to the top cones of the first and second weighing units. This may prevent the articles from being unnecessarily detained on the troughs, enabling stable supply of the articles to the top cones.

The articles may be adequately dispersed on each top cone and then evenly transported into the linear feeders. Thus, the articles may be successfully supplied through the linear feeders evenly and stably into the feeding hoppers and weighing hoppers.

This may prevent unfavorable events in combinatorial computations executed based on the weights of articles supplied to the weighing hoppers, for example, poor accuracy in combining the weighing hoppers or failure to optimally combining the weighing hoppers that stay within a predetermined range of weights.

### BRIEF DESCRIPTION OF THE DRAWINGS

Fig. 1 is a front view of a combination scale according to an embodiment of this disclosure.
Fig. 2 is a plan view of the combination scale illustrated in Fig. 1.
Fig. 3 is a longitudinal lateral view that schematically illustrates the combination scale illustrated in Fig. 1.
Fig. 4 is a plan view of main structural elements of the combination scale illustrated in Fig. 1.
Fig. 5 is a perspective view of main structural elements of the combination scale illustrated in Fig. 1.

### DESCRIPTION OF EMBODIMENTS

Embodiments of the technology disclosed herein are hereinafter described in detail with reference to the accompanying drawings.

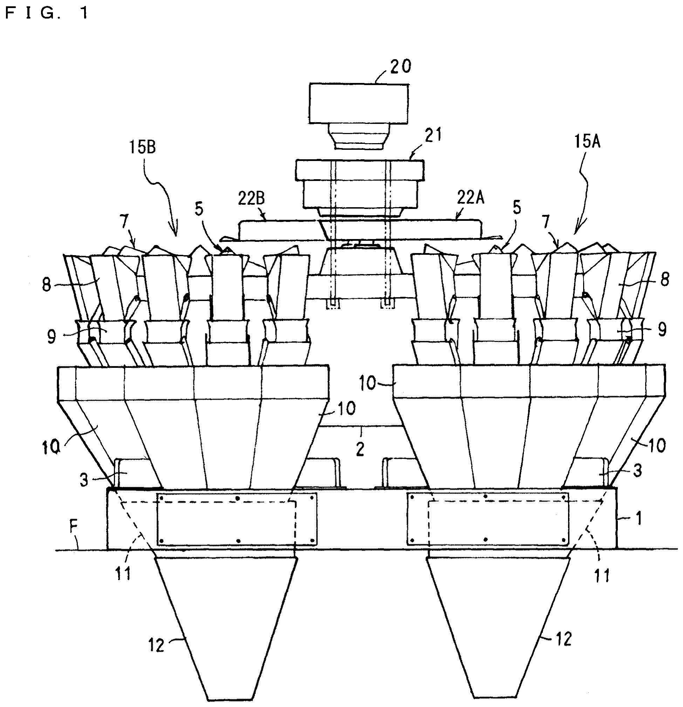

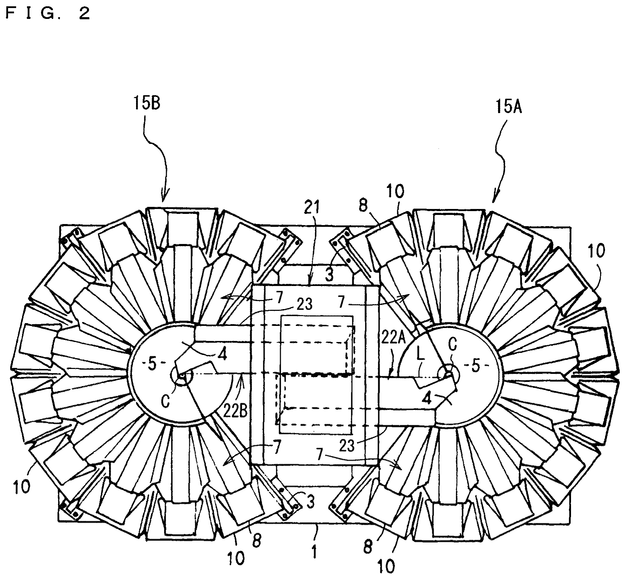

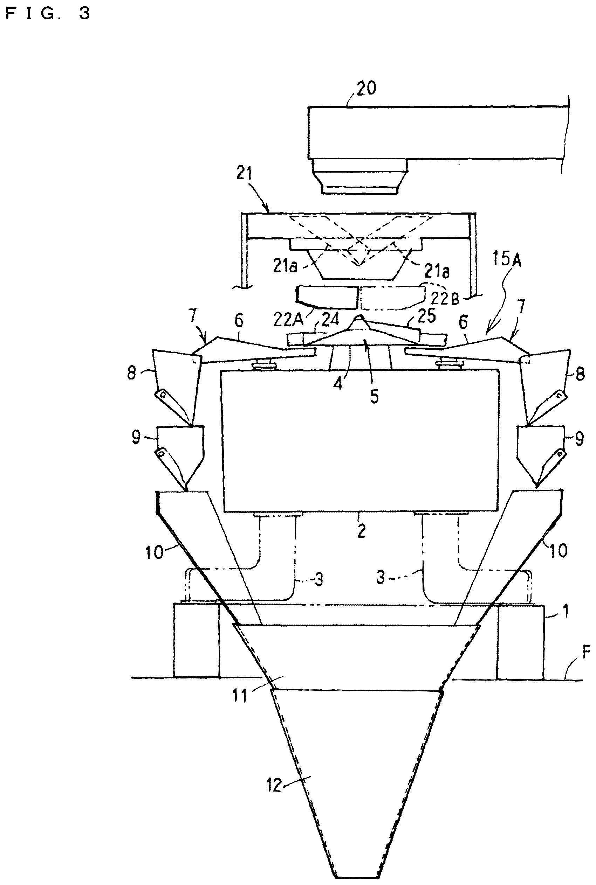

Fig. 1 is a front view of a combination scale according to an embodiment of this disclosure. Fig. 2 is a plan view of the combination scale illustrated in Fig. 1. Fig. 3 is a longitudinal lateral view that schematically illustrates the combination scale illustrated in Fig. 1.

The combination scale described in this embodiment weighs a predetermined amount of articles, for example, different kinds of foodstuffs and snacks and then discharges the weighed articles downward. This combination scale is equipped with two weighing units that are similarly structured and configured; first weighing unit 15A, and second weighing unit 15B. These weighing units are arranged next to each other in proximity (on left and right sides on Figs. 1 and 2).

This combination scale is installed on a floor surface F on an upper level of a frame built up like a tower. An operator of the combination scale is allowed to climb up and down this tower. The articles are variously combined and computed based on their weight values measured by the weighing unit 15A, 15B. The articles of a predetermined range of weights are thrown downward into a packaging apparatus installed below which is not illustrated in the drawings.

An H-shaped base 1 is installed on the floor surface F. This base is horizontally laid in plan view and has an opening vertically penetrating therethrough. A horizontally long center base 2 is supportably coupled to an upper position of the base 1 through a plurality of legs 3. This center base 2 is installed for both of the first and second weighing units 15A and 15B.

The weighing units 15A and 15B are essentially structured similarly to the known combination scales of circular arrangement. The weighing unit 15A, 15B includes a top cone 4 circular in plan view, a dispersion feeder 5, a plurality of linear feeders 7 (nine linear feeders in this example) each having a trough 6, a plurality of feeding hoppers 8, a plurality of weighing hoppers 9, a collection chute 10, and a collection funnel 11, 12. The dispersion feeder 5 vibrationally transports the articles dropping from upward using the top cone 4 toward its outer peripheral edge. The linear feeder 7 receives the dispersed articles using the trough 6 and vibrationally transports the received articles further outward. The feeding hopper 8 temporarily retains and then discharges the articles transported by the linear feeder 7. The weighing hopper 9 receives the articles discharged from the linear feeder 7 and weighs the received articles. The collection chute 10 guides the articles discharged from the weighing hopper 9 downward toward the center of the weighing unit 15A, 15B. The collection funnel 11, 12 collects the articles thus guided by the collection chute.

The dispersion feeders 5 are located in an upper portion of the center base 2. The top cone 4 of the dispersion feeder 5 has a substantially conical shape. The top cone 4 is vibrated in its circumferential direction by a vibration mechanism installed in the center base, not illustrated in the drawings.

The linear feeders 7 are radially disposed in an upper portion of the center base 2 in a manner that they surround the top cone 4 of the dispersion feeder 5.

The feeding hoppers 8 are detachably mounted to an outer circumferential portion of the center base 2, and lower gates of these hoppers are controlled to open and close by a driving unit not illustrated in the drawings.

The weighing hoppers 9 are detachably mounted to an outer circumferential portion of the center base 2, and lower gates of these hoppers are controlled to open and close by a driving unit not illustrated in the drawings. In the weighing hopper 9, the articles received are weighed by a load sensor including a load cell.

In the combination scale thus structurally configured, combinatorial computations are executed based on the weight values measured by the weighing hoppers 9 of the weighing unit 15A, 15B to select a combination of the weighing hoppers 9 containing the articles of a weight that stays within a range of predetermined weights. This combination scale opens the lower gates of the weighing hoppers 9 selected by the combinatorial computations to discharge the articles weighed earlier into the collection funnel 11, 12.

This embodiment is characterized by disposing two weighing units; first and second weighing units 15A and 15B, next to each other in proximity, which is hereinafter described in detail.

In the combination scale according to this embodiment, the first and second weighing units 15A and 15B are disposed next to each other in proximity to reduce a space required for installation.

In the combination scale in which the first and second weighing units 15A and 15B are thus disposed next to each other in proximity, an area near the opposing top cones 4 circular in plan view of the dispersion feeders 5 may be defined as a non-feeder region where no linear feeder 7 is present, as illustrated in Fig. 2.

Any arc-shaped area but the non-feeder region near the top cones 4 may be defined as a feeder-located region where the linear feeders 7 are located. In the description given below, additional reference signs may be further appended to some of the circularly arranged linear feeders 7 to clarify their positions.

At an upper, mid position between the weighing units 15A and 15B is exposed the discharge port of a feeding conveyer 20; bucket-type lift conveyer, as illustrated in Fig. 1. A distribution feeder 21 is disposed immediately below the feeding conveyer 20. The distribution feeder 21 receives the articles dropping from the feeding conveyer and then discharges the received articles. At positions below the distribution feeder 21 are disposed two article feeders; first and second article feeders 22A and 22B. These article feeders receive the discharged articles and vibrationally transport the received articles onto the top cones 4 of the dispersion feeders 5 in the weighing units 15A and 15B.

The article feeders 22A and 22B are identically structured and configured. The article feeder 22A alone is hereinafter described, structural features of which are applied likewise to the other article feeder 22B.

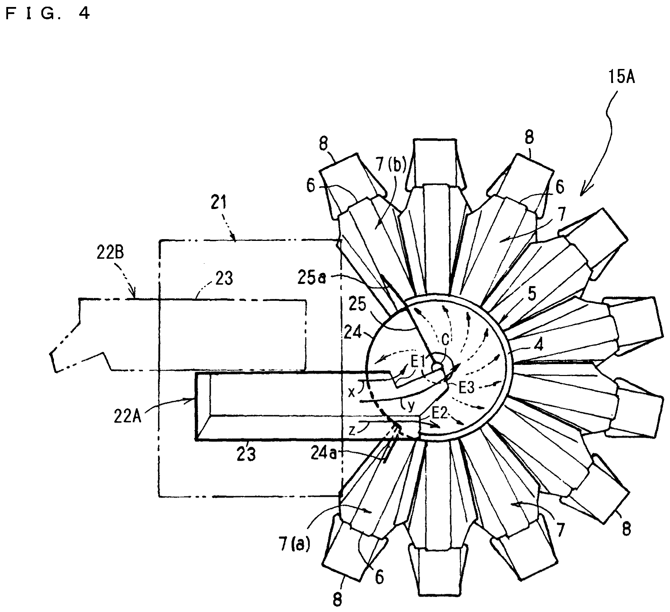

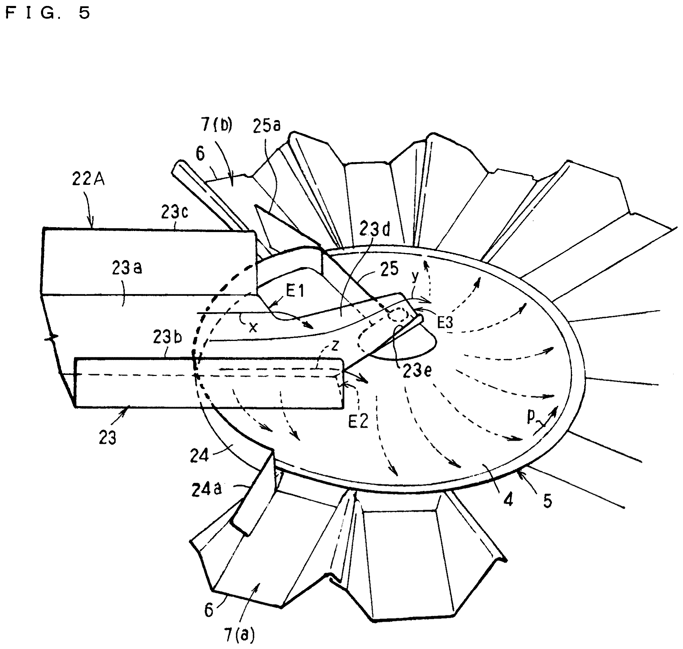

As illustrated in Figs. 4 and 5, the article feeder 22A has a horizontally long trough 23. The article feeder 22A, using this trough 23, vibrationally transports the article received from the distribution feeder 21 onto the top cone 4 of the dispersion feeder 5.

This embodiment provides the following technical features to reduce the trough 23 of the article feeder 22A in length in the direction of transport of articles and thereby prevent the articles from being unnecessarily detained on the trough 23.

As illustrated in Figs. 2 and 4, the troughs 23 of the first and second article feeders 22A and 22B are extending in the direction of transport of articles (lateral direction on Figs. 2 and 4). The troughs 23 are disposed in parallel next to each other in a manner that they overlap in part in a direction orthogonal to the direction of transport of articles (vertical direction on Figs. 2 and 4). Thus, the troughs 23 are adjacent to each other in the direction orthogonal to the direction of transport of articles.

As illustrated in Fig. 2, the troughs 23 of the first and second article feeders 22A and 22B are respectively disposed on one side and on the other side across a virtual line L that connects centers C of the top cones 4.

The distribution feeder 21 disposed immediately below the feeding conveyer 20 receives the articles dropping from the feeding conveyer 20 and redirects the articles in a longitudinal direction orthogonal to the direction of transport of articles, discharging them to the article-incoming end of each trough 23. The distribution feeder 21, as illustrated in Fig. 3, opens and closes a pair of gate plates 21a, inviting the articles to flow downward, so that the articles finally arrive at the article-incoming end of each trough 23 of the article feeders 22A and 22B disposed next to each other in the direction orthogonal to the direction of transport of articles.

The troughs 23 of the article feeders 22A and 22B are respectively disposed in parallel next to each other on one side and on the other side in a manner that they overlap in part in the direction orthogonal to the direction of transport of articles. This may allow each trough 23 to increase in length in the direction of transport of articles.

As described earlier, the two troughs 23 of the article feeders 22A and 22B are disposed in parallel next to each other in a manner that they overlap in part in the direction orthogonal to the direction of transport of articles. Below is given and discussed a different example in which the two troughs of the first and second article feeders 22A and 22B are arranged unlike this embodiment.

In this given example, article-incoming ends of two troughs of the first and second article feeders in the direction of transport of articles are butted against each other at a middle position between the centers C of the top cones 4 of the first and second weighing units 15A and 15B, i.e., between the center C of one of the top cones 4 and the center C of the other top cone 4, and article-outgoing ends of these troughs in the direction of transport are located above the centers C of the top cones 4.

In the two troughs of the first and second article feeders thus disposed, the articles supplied from the article feeder 21 are received at a position between the centers C of the top cones 4, and one of the troughs transports the received articles in the upper direction of the center C of one of the top cones 4, while the other trough transports the received articles in the upper direction of the center C of the other top cone 4.

In this instance, the two troughs of the first and second article feeders 22A and 22B are linearly disposed, along the direction of transport of articles, between the centers C of the top cones 4 of the first and second weighing units 15A and 15B.

The article-incoming ends in the direction of transport of two troughs of the first and second article feeders are butted against each other at a middle position between the centers C of the top cones 4, and the article-outgoing ends of these troughs are located above the centers C of the top cones 4. Unlike the embodiment described earlier, these two troughs thus disposed have no overlap therebetween in the direction orthogonal to the direction of transport of articles. The lengths of the troughs in the direction of transport of articles are, therefore, reducible by a length corresponding to the overlap. The lengths of the troughs in the direction of transport of articles are substantially 1/2 of the distance between the centers C of the top cones 4 of the first and second weighing units 15A and 15B. Specifically, the lengths of the troughs are thus substantially 1/2 of the distance between the centers C of the top cones 4 by linearly disposing these troughs along the direction of transport between the centers C of the top cones 4 of the first and second weighing units 15A and 15B.

In this embodiment, the troughs 23 of the first and second article feeders 22A and 22B are not thus disposed linearly in the direction of transport of articles but are disposed on one side and on the other side in parallel next to each other across the virtual line L that connects the centers C of the top cones 4 in a manner that these troughs overlap in part in the direction of transport of articles.

The lengths of the troughs in the direction of transport of articles, therefore, may be allowed to increase by a length corresponding to the overlap in the direction orthogonal to the direction of transport of articles.

Greater lengths of the troughs 23 of the first and second article feeders 22A and 22B along the direction of transport of articles may prevent the articles from being unnecessarily detained on the troughs 23 and may further facilitate control of the articles to be supplied to the top cones 4 of the first and second weighing units. Thus, the articles may be more reliably supplied to the top cones 4.

In this embodiment, the article-outgoing end in the direction of transport of a bottom plate 23a of the trough 23 is narrowed in width, as illustrated in Figs. 4 and 5. This narrowed portion forms an extension 23d that extends, further than ends E1 and E2 of side plates 23b and 23c standing upright from the bottom plate 23a, upward near the center C of the top cone 4 circular in plan view

The trough 23 includes three main feed path; first feed path x, second feed path y, and third feed path z. The first feed path x is used to feed the top cone 4 with articles from one end of the bottom plate 23a in the direction of width. The second feed path y is used to feed the top cone 4 with articles from an extending end E3 of the extension 23d. The third feed path z is used to feed the top cone 4 with articles from another end E2 of the bottom plate 23a in the direction of width.

The top cone 4 of the dispersion feeder 5 is vibrationally driven in its circumferential direction. The articles on the top cone 4 are, therefore, vibrated and thereby transported to the outer peripheral edge of the top cone 4 along a circumferential direction p, as illustrated with a broken line in Figs. 4 and 5.

A dividing wall 25 is vertically disposed on the top cone 4 at a boundary position between two regions; feeder-located region where the linear feeders 7 are circularly arranged around the top cone 4, and non-feeder region where no linear feeder 7 is present. Specifically, the dividing wall 25 is vertically disposed on the top cone 4 located at a boundary position between the non-feeder region and the most downstream side of the feeder-located region along the circumferential direction p for article transport illustrated in Fig. 5. This dividing wall 25 is extending to the outer peripheral edge of the top cone 4 from the center C of the top cone 4 circular in plan view.

The articles transported to the outer peripheral edge of the top cone 4 along its circumferential direction p are prevented by this dividing wall 25 from moving away from a region of the top cone 4 corresponding to the feeder-located region into the non-feeder region

A guiding wall 24 is vertically disposed on the outer peripheral edge of the top cone 4 in its circumferential direction along the non-feeder region where no linear feeder 7 is present. This guiding wall 24 guides the articles onto the top cone 4 in the feeder-located region where the linear feeders 7 are circularly arranged.

The articles dropping from the distribution feeder 21 are discharged into the horizontal long trough 23 of the article feeder 22A and then vibrated and transported along the long transport path. This may prevent the articles from being unnecessarily retained on the trough 23, allowing the articles to be reliably supplied to the top cone.

The articles arriving at the article-outgoing end of the trough 23 of the article feeder 22A are supplied onto the top cone 4 mainly through the third feed paths; first to third feed paths x, y and z. The articles travelling through the second and third feed paths y and z are transported to the outer peripheral edge in the circumferential direction p of the top cone 4 and dispersed into the linear feeders 7.

The dividing wall 25 blocks the articles flowing onto the top cone 4 and then guides them into the linear feeder 7 (b) most downstream in the direction of transport of articles along the circumferential direction p. The dividing wall 25 is extending more upward than the linear feeder 7 (b) beyond the outer peripheral edge of the top cone 4. The dividing wall 25b has an extension 25a, which may ensure that the articles are transported into the linear feeder 7 (b) most downstream in the direction of transport of articles along the circumferential direction p.

Of the linear feeders 7 circularly arranged around the top cone 4, the linear feeder 7 (a) disposed most upstream in the direction of transport of articles along the circumferential direction p has an article-incoming end located below the article-outgoing end of the trough 23 of the article feeder 22A.

The trough 23 of the article feeder 22A is located closer to the linear feeder 7 (a) most upstream in the direction of transport or articles along the circumferential direction p. The articles received through the third article feed path z are, therefore, hardly guided into the most upstream linear feeder 7 (a).

The articles traveling through the first feed path x of the trough 23 of the article feeder 22A are guided onto the top cone 4 corresponding to the non-feeder region surround by the guiding wall 24 and then transported through vibration along the direction of transport of articles along the circumferential direction p. Thus, the articles traveling through the first feed path x are guided under the trough 23 of the article feeder 22A, arriving at an end of the guiding wall. The articles are then guided into the linear feeder 7 (a) most upstream in the direction of transport of articles along the circumferential direction p.

The articles that did not arrive at the most upstream linear feeder 7 (a) continue to be transported to the outer peripheral edge along the circumferential direction p and then dispersed into the downstream linear feeders 7.

The extension 24a of the guiding wall 24 is formed continuous to the most upstream linear feeder 7 (a) beyond the outer peripheral edge of the top cone 4. This may ensure that the transported articles are invited into the most upstream linear feeder 7 (a).

According to this embodiment, the first and second weighing units 15A and 15B may be disposed in proximity, with their top cones 4 being very close to each other. Yet, the troughs 23 of the first and second article feeders 22A and 22B that respectively feed the top cones 4 with articles are disposed in parallel next to each other, as described thus far. This structural feature may allow the troughs to increase in length in the direction of transport of articles.

Thus, the articles to be transported may be prevented from being unnecessarily detained on the troughs 23 of the first and second article feeders 22A and 22B, which may ensure stable supply of the articles onto the top cones 4 of the first and second weighing units 15A and 15B.

In the trough 23 of the first, second article feeder 22A, 22B, an end E3 of the bottom plate 23A in the direction of transport of articles has the extension 23d that extends more downstream than the side plate 23b, 23c. At the extension 23d, the articles may be widely discharged onto the top cone 4 of the first, second weighing unit 15A, 15B without any hindrance possibly caused by the side plate 23b, 23c

The extension 23d of the bottom plate 23a in the trough 23 of the first, second article feeder 22A, 22B is extending toward the center C of the top cone 4 of the first, second weighing unit 15A, 15B. When the troughs 23 are each disposed on one side and on the other side across the virtual line L that connects the centers C of the top cones 4 of the first and second weighing units 15A and 15B, therefore, the articles may be surely supplied to near the center C of each top cone 4 and then dispersed on the top cone 4 into the surrounding linear feeders 7.

The articles arriving at the article-outgoing end of the trough 23 of the article feeder 22A are supplied onto the top cone 4a in at least three directions mostly through the three article feed paths x, y and z. The articles, if supplied in one direction alone, may easily get stuck on or lean to one side on the top cone. Such an unfavorable event, however, may be unlikely to occur, allowing the articles to be evenly dispersed on the top cone.

This may conduce to balanced and stable supply of the articles from the top cone 4 into the linear feeders 7. Then, the articles supplied from these linear feeders 7 may be evenly supplied into the weighing hoppers 9 through the feeding hoppers 8.

As a result, unfavorable events may be prevented in combinatorial computations executed based on the weights of articles supplied to the weighing hoppers 9, for example, poor accuracy in combining the weighing hoppers or failure to optimally combining the weighing hoppers that stay within a predetermined range of weights

The troughs 23 of the first and second article feeders 22A and 22B are not necessarily so shaped as described in this embodiment. Provided that the articles are dischargeable in at least three directions, the troughs may have an optional shape depending on the transportability of articles to be handled.

### REFERENCE SIGNS LIST

- 4: top cone
- 5: dispersion feeder
- 7: linear feeder
- 7 (a): most upstream linear feeder
- 7 (b): most downstream linear feeder
- 8: feeding hopper
- 9: weighing hopper
- 15A, 15B: first, second weighing unit
- 21: distribution feeder
- 22A, 22B: first, second article feeder
- 23: trough
- 24: guiding wall
- 24a: extension
- 25: dividing wall
- 25a: extension

## Claims

1. A combination scale comprising:
a first weighing unit; and
a second weighing units, the first and second weighing units each comprising:
a dispersion feeder that transports articles toward an outer peripheral edge of the top cone, the dispersion feeder comprising a top cone circular in plan view;
a plurality of linear feeders that transport the articles supplied from the top cone, the linear feeders being disposed circumferentially around the top cone;
a plurality of feeding hoppers that receive the articles supplied from the linear feeders; and
a plurality of weighing units comprising a plurality of weighing hoppers that weigh the articles supplied from the feeding hoppers,
the combination scale further comprising:
a first article feeder; and
a second article feeder, the first and second article feeders respectively feeding the top cones of the first and second weighing units with the articles,
the first article feeder and the second article feeder each comprising a trough used to transport the articles to the top cone, the toughs of the first and second article feeders extending along a direction of transport of the article, the troughs being disposed in parallel next to each other in a manner that there is an overlap in part therebetween in a direction orthogonal to the direction of transport of the articles.

2. The combination scale according to claim 1, wherein the troughs of the first and second article feeders are respectively disposed on one side and on another side across a virtual line that connect centers of the top cones circular in plan view.

3. The combination scale according to claim 1 or 2, wherein
the troughs of the first and second article feeders each comprise:
a bottom plate extending along the direction of transport of the articles; and
side plates standing upright from both sides of the bottom plate in a direction of width orthogonal to the direction of transport of the articles, and
the bottom plates each comprise, at an end thereof in the direction of transport of the articles, an extension extending more downstream than the side plates in the direction of transport of the articles.

4. The combination scale according to claim 3, wherein the extensions of the troughs of the first and second article feeders are extending beyond ends of the bottom plates in the direction of width toward centers of the top cones of the first and second weighing units.

5. The combination scale according to claim 4, wherein
the troughs of the first and second article feeders each comprise:
a first article feed path;
a second article feed path; and
a third article feed path,
the first article feed paths are each used to feed the top cone with the articles from the end on one of the both sides of the bottom plate in the direction of width,
the second article feed paths are each used to feed the top cone with the articles from an extended end of the extension, and
the third article feed paths are each used to feed the top cone with the articles from the end on another one of the both sides of the bottom plate in the direction of width.

6. The combination scale according to claim 5, wherein
an area near the top cones of the first and second weighing units is divided into regions; a feeder-located region where the linear feeders are circularly arranged, and a non-feeder region where no linear feeder is present,
the articles received from the troughs of the first and second article feeders are transported by the top cones of the first and second weighing units toward the outer peripheral edge of each of the top cones in a circumferential direction thereof,
a dividing wall is vertically disposed at a boundary position on each of the top cones between the feeder-located region and the non-feeder region, the dividing wall extending from the center of the top cone circular in plan view toward the outer peripheral edge thereof, and
the dividing walls each prevent the articles transported toward the outer peripheral edge of the top cone in the circumferential direction thereof from moving out of a region of the top cone corresponding to the feeder-located region into a region corresponding to the non-feeder region.

7. The combination scale according to claim 6, wherein
a guiding wall is vertically disposed circumferentially on the outer peripheral edge of each of the top cones, and
the first article feed path feeds a region of the top cone corresponding to the feeder-located region with the articles.
